(19) Europäisches Patentamt
European Patent Office
Office européen des brevets

(11) **EP 1 397 892 B1**

(12) **EUROPEAN PATENT SPECIFICATION**

(45) Date of publication and mention
of the grant of the patent:
**02.07.2008 Bulletin 2008/27**

(51) Int Cl.:
***H04L 12/56*** *(2006.01)* ***H04Q 11/04*** *(2006.01)*

(21) Application number: **01944004.9**

(22) Date of filing: **31.05.2001**

(86) International application number:
**PCT/SE2001/001238**

(87) International publication number:
**WO 2002/098076 (05.12.2002 Gazette 2002/49)**

(54) **LOAD CONTROL IN UMTS ACCESS NETWORKS USING IP PROBE PACKETS**

LASTREGELUNG IN UMTS-ZUGRIFFSNETZEN UNTER VERWENDUNG VON IP-SONDENPAKETEN

CONTROLE DE CHARGE DANS DES RESEAUX DE SYSTEME UNIVERSEL DE TELECOMMUNICATIONS MOBILES, UTILISANT DES PAQUETS SONDES IP

(84) Designated Contracting States:
**AT BE CH CY DE DK ES FI FR GB GR IE IT LI LU MC NL PT SE TR**

(43) Date of publication of application:
**17.03.2004 Bulletin 2004/12**

(73) Proprietor: **TELEFONAKTIEBOLAGET LM ERICSSON (publ)**
**164 83 Stockholm (SE)**

(72) Inventors:
• **JANNOK, Daniel**
**S-972 34 Luleå (SE)**

• **JOHANSSON, Staffan**
**S-974 55 Luleå (SE)**
• **MARKLUND, Daniel**
**S-974 41 Luleå (SE)**

(74) Representative: **Sjöberg, Mats Hakan**
**Ericsson AB**
**Patent Department**
**164 80 Stockholm (SE)**

(56) References cited:
**EP-A2- 0 858 242** **WO-A1-00/51372**
**US-A- 5 777 984** **US-A- 6 061 330**

## Description

### FIELD OF THE INVENTION

The present invention relates to a method and arrangement for determining the load and accessibility of transmission paths in IP-based radio access networks.

### BACKGROUND OF THE INVENTION

Communication networks that comply with the UMTS (Universal Mobile Telecommunications System) standard will introduce Internet Protocol (IP) technology in the UMTS Terrestrial Radio Access Network (UTRAN). IP has the advantage to be a simple communication protocol that fits various types of network environments; however, it does not have any functionality for network resource administration or gives any guarantees, e.g. with regard to delay or delivery of packets. Thus, in a UTRAN that bases on IP only, all data streams compete with each other and resources are distributed such that a data packet that comes first to a link will be served first, i.e. all packets are treated equally. As the UTRAN needs to support network traffic having both real-time and non-real-time characteristics it is desirable to be able to distribute network resources in such a way that the requirements for various types of traffic are fulfilled while at the same time using the network resources as efficiently as possible. For real-time traffic in particular it is crucial that the network is always under control with respect to, e.g., delivery delays or resource usage. In order to avoid situations with unpredictable delays and congestions as experienced in a stand-alone IP-network, the capacity of the network must have large margins to the estimated maximum load.

There are a number of additional categories of techniques for an IP-based network that can be used to increase a given level of services with a limited amount of network resources: Admission control, service differentiation, resource allocation, and congestion control are four categories of techniques that can be applied to provide better service to user equipments. However, any of said techniques is more or less depending on knowledge of the current load status in the network.

One method to achieve information on the load status in an IP-based network is Load Control, which is a technique that provides a mechanism to give a simple load feedback upon access request. This has been described in a working document "Load Control of Real-Time Traffic" by L. Westberg et al. which has been proposed to the IETF (Internet Engineering Task Force) on April 19, 2000. In short, said document describes that a probe packet is sent via a transmission path in response to a request to transmit additional traffic via said path. By means of the probe packet it is possible to retrieve a load status information that can be used to decide whether or not it can be allowed to permit additional traffic on said path. The probe packet is sent from a first node via said path to a second node and sent back to the first node. A probe packet that passes a Load Control unit is marked if the momentary load that is experienced by said Load Control unit exceeds a certain threshold level. The first node can then use the marking status information of the probe packet as an indication of the load on the path.

The document EP 0 858 242 A2 discloses a method in an asynchronous network for controlling the cell flow in the upstream and downstream portions of the virtual connection by respective control loops employing resource management cells. The degree of backward coupling between the two control loops is adjusted to optimise network stability and response time by filtering the downstream backward explicit rate or monitoring the degree of congestion at the boundary between the control loops.

### SUMMARY OF THE INVENTION

When applying the Load Control mechanism for IP-based networks as described in the state of the art, e.g., in a UMTS radio access network the following disadvantages have been observed:

Considering a probe packet is sent from a first unit to a second unit and returned to said first unit in order to determine the load status of the transmission path between said units. In this case, the sending unit can only retrieve a very limited information from one received probe packet. If said packet has been marked it is only possible to establish that there must have been at least one section on said path, either on the uplink or downlink, that had a load higher than a certain allowed threshold level. However, as the load situation on the transmission paths in the network can change rapidly, such a single marked packet does not provide any indication whether the overload is a rather temporary phenomena or an indication of an upcoming severe congestion.

In case of asymmetric load distributions, i.e. a considerable different load on the uplink and downlink, it is another problem that a marked probe packet does not indicate on which direction the overload has been detected.

Still another problem is that a decision to allow additional traffic on a transmission path will be delayed by at least one Round Trip Time (RTT) because probe packets are not sent before a request to send additional traffic has been received and must traverse the entire transmission path twice, i.e. in both uplink and downlink direction, before they are returned to the sending unit and can be used for an admission decision.

The method for Load Control as described in the state of the art only provides a vague and incomplete indication of the actual load status on the transmission paths of an IP-based communication network.

Therefore, it is a first object of the present invention to achieve a method that provides more detailed information on the load and accessibility of the transmission links of a IP-based communication network.

This is advantageously solved by the teaching of claim 1.

It is another object of the present invention to achieve arrangements that are capable to perform the method according to the present invention.

This is advantageously solved by the teaching of claims 13-15.

Briefly, these objects of the present invention are accomplished by the method according to the present invention, which is performed in an overload detector that is part of a communication network and connected to a centralised controller unit and to each of the transmission paths to a plurality of network units. According to the invention, a load indication is determined for the transmission path from the marking status indicator of the dedicated probe packets, and an access state is assigned which thereafter is reported to the centralised controller unit in response to an access request.

It is a first advantage of the present invention that it is possible to retrieve more detailed and secure information on the load status of the various uplink and downlink transmission paths of the communication network which can be applied for determining an access state of said transmission paths.

It is another advantage of the present invention that said information on the load status information is available without appreciable delay.

Advantageously, the present invention allows thus to maintain a map of the load and access status of the supervised part of the network.

Therefore, it is yet another advantage of the present invention that the network resources can be used more efficiently without degrading the quality of service.

Other objects, advantages and novel features of the invention will become apparent from the following detailed description of the invention when considered in conjunction with the accompanying drawings and claims.

## BRIEF DESCRIPTION OF THE DRAWINGS

For a better understanding, reference is made to the following drawings and preferred embodiments of the invention.

Figure 1 shows a part of a communication network consisting of a plurality of transmission links that form transmission paths between a radio network controller and a plurality of radio base stations.

Figure 2 shows a Load Control unit that marks IP-packets in case of a detected overload on one direction.

Figure 3 shows a diagram that represents an example of the link load that is measured by a Load Control unit in a network node.

Figure 4 shows a flowchart that describes the method steps according to the present invention in order to send probe packets.

Figure 5 shows a state diagram of the possible access states of a transmission paths.

Figure 6 shows a shift register that can be applied in order to determine the access state of a transmission path.

Figure 7 shows an example of a weighting function that can be used to determine a sequence of weighting factors $\xi_m(w)$.

Figure 8 shows a sequence of marked and unmarked probe packets that has been received via a transmission path and that can be used in order to determine the access state of said transmission path.

Figures 9a-9c show flowcharts that describe the method steps according to the present invention in order to determine the access state of a transmission path.

Figure 10 shows a flowchart that describes the method steps according to the present invention in order to handle an access request for additional traffic on a transmission path.

## DETAILED DESCRIPTION

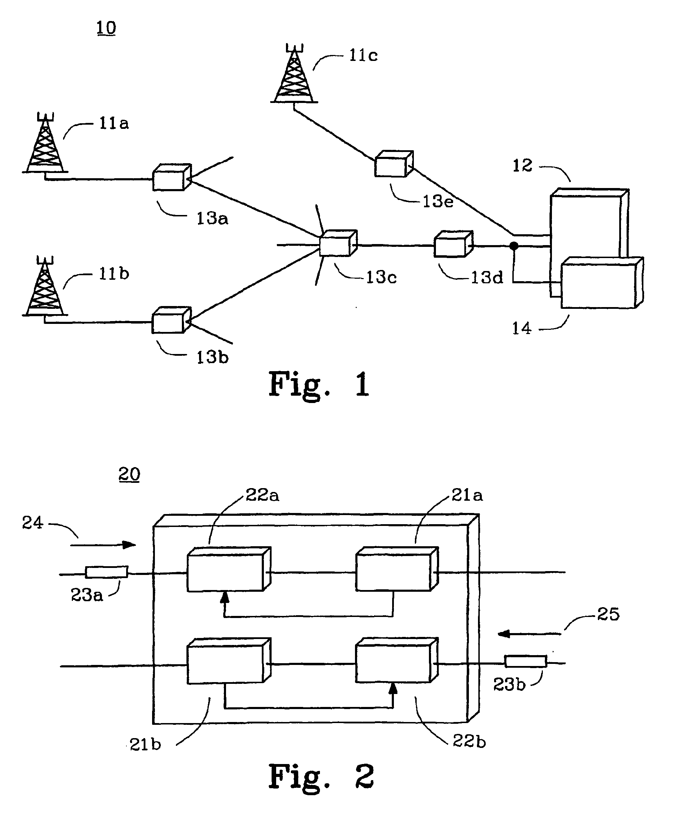

Figure 1 shows a part of a communication network 10 within which the method according to the present invention can be performed. In this figure said network 10 consists of a UMTS terrestrial radio network (UTRAN) comprising a plurality of radio base stations 11a-11c that are connected to a common radio network controller 12 by means of transmission paths and communicate with each other by help of an IP-based communication protocol. The radio base stations 11a-11c can be connected directly to said radio network controller 12, e.g. radio base station 11c, or by partly using the same transmission paths, e.g. radio base stations 11a,11b. The IP-based traffic between radio base stations 11a-11c and radio network controller 12 is controlled and forwarded via dedicated network units 13a-13e. Within the scope of the present invention, the nodes of the part of the network that shall be controlled must be equipped with a. Load Control unit that marks dedicated probe packets in order to indicate the load status on the transmission paths, which can serve as an information to determine the access status of said transmission paths between radio network controller 12 and radio base stations 11a-11c, i.e. whether or not it is possible to allow additional traffic on said transmission paths. Said Load Control units can be incorporated, e.g. in said network units 13a-13e, and will be described in greater detail in figure 2. The load status of the various transmission paths between radio network controller 12 and said radio base stations 11a-11c is analysed and stored by an overload detector 14 which performs the method according to the present invention in order to keep track on the reported load status and access status of said transmission paths. Said overload detector 14 is preferably incorporated in the radio network controller 12 but could also be located at another location on the assumption that the overload detector 14 can from this location access the transmission paths of all radio base stations that shall be controlled.

Figure 2 shows an example of a Load Control unit 20 which is located in a network node that is part of a transmission link that belongs to a transmission path between radio network controller 12 and one of the radio base stations 11a-11c such that each probe packet that passes said link, either in uplink direction 24 or downlink direction 25, must pass this unit. The Load Control unit 20 contains a probe unit 21a for the uplink and a probe unit 21b for the downlink that each measures by means of an appropriate criterion whether the load on the outgoing link for the respective direction is higher than a certain pre-defined threshold value. In this case the probe unit 21a,21b initiates that the corresponding marking unit 22a,22b for the direction on which the overload has been detected marks the IP-packet 23a,23b that passes this unit. The load of the transmission link can be measured in a number of ways: It is one conceivable approach to compare the measured bit rate of the link to a known or allowed maximum bit rate. Another approach is to measure the length of the input buffer of the link and by this means receive an information on the delay that is added to each IP-packet for this hop. The marking threshold can be defined, e.g., as a percentage of an accepted maximum value of the measured factor. The threshold level is manageable by means of an appropriate management protocol, e.g. SNMP.

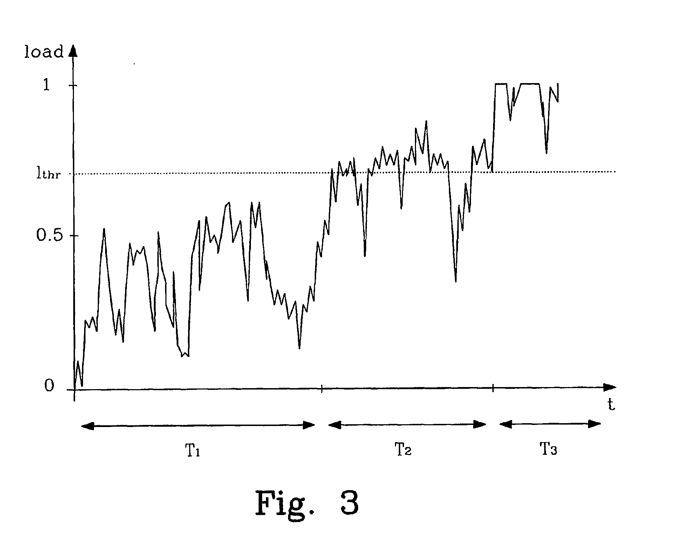

Figure 3 shows an example of the load status of a transmission link between two network nodes that is reported to the overload detector 14. Apparently, in a short-term perspective the load on a link can change rapidly in a rather short time. It is thus not possible to get reliable information on the actual load status of the link and whether or not it is possible to admit additional traffic and to which amount. However, in a long-term perspective it is possible to distinguish in this example three load statuses: For a time interval $T_1$ the average load remains clearly below a threshold load $l_{thr}$. Within a second time interval $T_2$ the load is at the threshold level and, finally, for a third time interval $T_3$, the load is over the given threshold level $l_{thr}$.

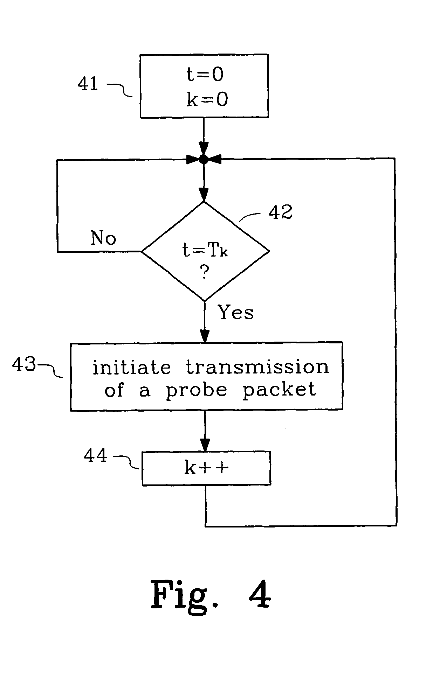

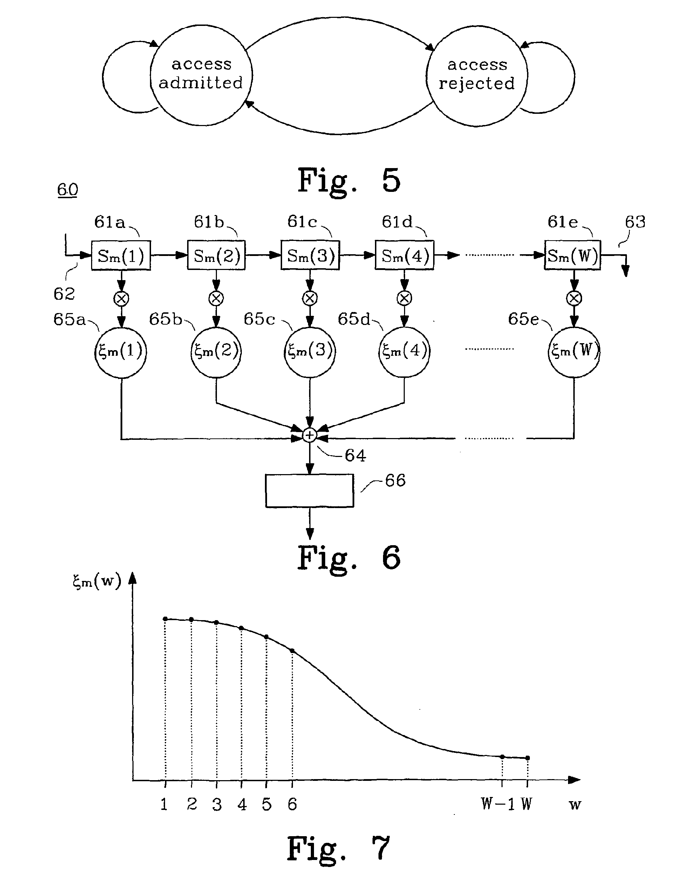

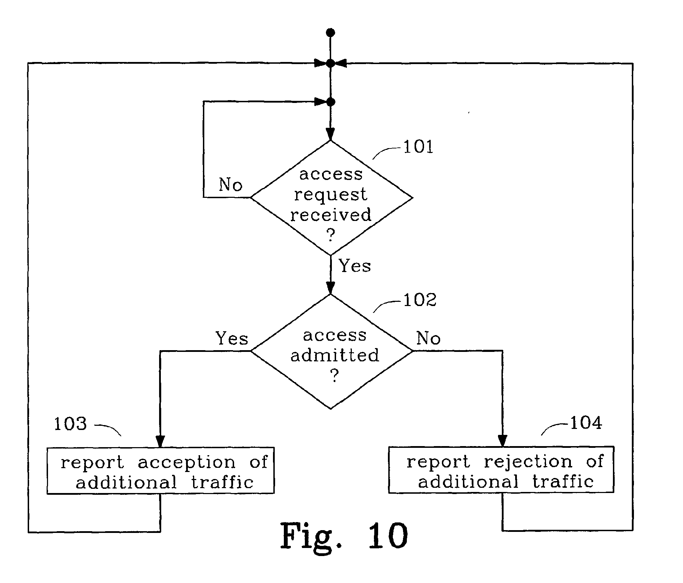

The following will now describe the functions of the overload detector 14 according to the present invention. The present invention aims principally to improve the reliability of the load status information that can be retrieved from the probe packets that are sent and received via the various transmission paths and, thus, to improve a correct determination of the access status for said paths and the handling of access requests in order to avoid an overload on the transmission links of the IP-based network. Accordingly, the following description of the functions of the overload detector 14 will focus on three aspects: (1) The transmission of probe packets as explained by help of figure 4, (2) the determination of an access status as explained by help of figures 5-9, and (3) the handling of access requests as explained by help of figure 10.

Figure 4 shows the steps that the overload detector 14 performs in order to transmit probe packets. There is no need for dedicated probe packets that are only sent for this purpose and, thus, add overhead to the network. Instead, any IP-packet can be used as probe packet. It is a basic idea of the present invention that the reliability of the information, which is retrievable from the received probe packets, can be increased if said packets are sent sufficiently often and, preferably, at periodic times. The method steps as shown in figure 4 are performed for each transmission path between a radio network controller 12 and a radio base station 11a-11c as shown in figure 1. Said method starts at a fictitious time t=0 with a counter index k=0, block 41. At selected discrete points in time $t=T_k$, block 42, the transmission of a probe packet is initiated, block 43, and the counter index k is successively increased, block 44. Said discrete points in time $T_k$ can be determined according to several alternatives: The simplest alternative could be to define constant time intervals $\tau$ after which a probe packet is sent. For such a time interval, e.g., $\tau=0,1ms$, the transmission of a probe packet is initiated for $T_k=k*\tau$; k=1,2,3,... Within the scope of the present invention it appears to be a conceivable alternative to define said time intervals $\tau$ with regard to the momentary bit rate on a transmission path. When supposing a transmission path having a bit rate b where each $N^{th}$ packet shall be used as a probe packet the transmission of a probe packet is initiated at times $T_k=k*N/b$; k=1,2,... However, it is notwithstanding possible to apply other criterions for the definition of appropriate times $T_k$. It is, e.g., a possibility to vary the rate of transmitted probe packets in accordance with the load on a transmission path.

The overload detector 14 according to the present invention should preferably also be able to detect and handle asymmetric load distributions on the uplink and downlink of each controlled transmission path. Therefore, in order to be capable to distinguish between uplink and downlink the overload detector must for these cases distinguish between probe packets that are dedicated to determine the load status of the uplink and probe packets that are dedicated to determine the load status of the downlink. This can be achieved by applying, e.g., an unused bit in the header field of the IP-packets that are used as probe packets. There are two unused bits in the Type of Service field of the IP-header that could be applied for this purpose. It is another possibility to send probe packets from two sites, e.g. from the overload detector 14 and from each of the radio base stations 11a-11c. Then, the load status of the transmission path in one direction can be determined by help of probe packets that have been transmitted from one site and, correspondingly, the load status of the reverse direction by help of probe packets that have been transmitted from the other site. The overload detector 14 could, e.g., initiate the transmission of probe packets that are intended to determine the load status of the downlink. These packets are treated as probe packets only for the downlink but simply returned to the overload detector from the terminating unit of the transmission path, e.g. a radio base station 11a-11c. The terminating units on the other hand initiate the transmission of probe packets only for the uplink. The overload detector receives thus information on the load status from probe packets that have been transmitted from two independent sites.

The following will describe the method steps that are necessary to determine the access state of a transmission path between radio network controller 12 and one of the radio base stations 11a-11c by means of the information that can be retrieved from the received probe packets. Corresponding method steps must be performed for each transmission path for which an access state shall be retrieved. Figure 5 demonstrates the two possible states "access admitted" and "access rejected" that are applied for both uplink and downlink of each transmission link and the possible state transitions depending on the evaluation of the reported link load status.

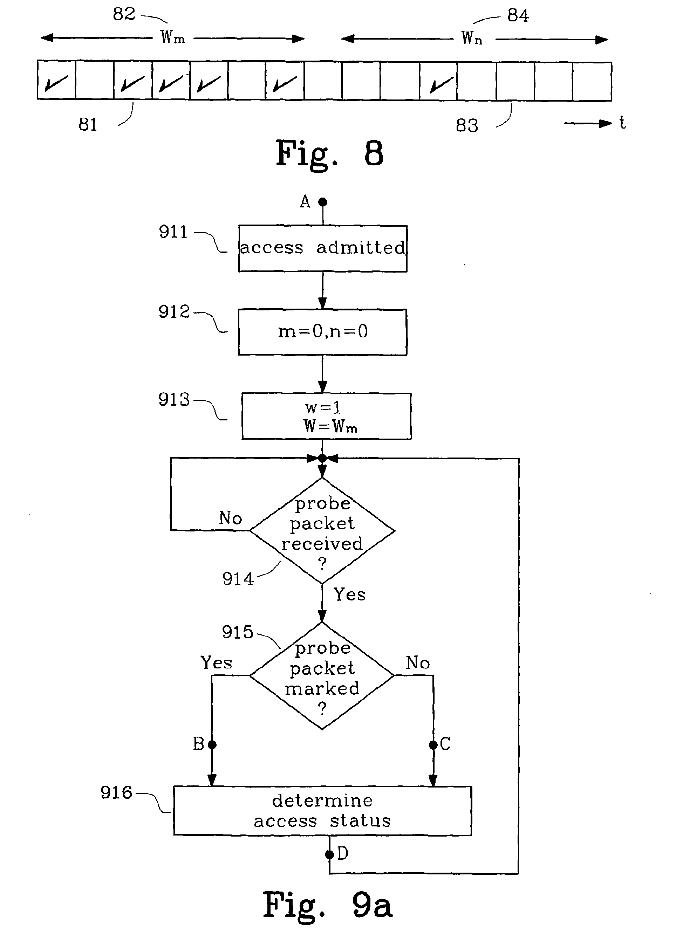

Figure 9a shows the steps that the overload detector 14 performs in order to determine said access state. It can be presumed that there is initially no traffic in the communication network, i.e. all transmission links are in a state "access admitted", block 911. The indexes m and n are initially set to a value 0, block 912, and denote counters of the number of received marked and unmarked probe packets, respectively, within an observation period. The window size W describes the length of said observation period within which the marking status of received probe packets is counted. In this example, the window size is initially set to a length $W_m$, which denotes the window size that is applied for detection of marked packets. A window position pointer w is set to a value 1, block 913. Then, the overload detector waits for received probe packets, block 914. If a probe packet has been received, block 914 Yes, it is distinguished between marked probe packets, block 915 Yes, and unmarked probe packets, block 915 No. The method according to the present invention will initiate the appropriate actions for determining the access status, block 916, and then return to an idle position and wait for the next received probe packet, block 914.

There are at least two conceivable alternatives to determine the access status of a transmission path. Both alternatives rely on the idea that probe packets are sent sufficiently often and at periodic times such that the overload detector can use a sufficient amount of information on the marking status of received probe packets. In both alternatives, the access status is determined by means of analysing the marking status of a received probe packet together with the marking status of previously received probe packets.

The principal idea of the first alternative will now be explained by help of figures 6 and 7. When a probe packet has been received from a transmission path the access status for this path is determined from a calculated overload indicator L that is retrieved from the marking status of the last W received probe packets. In terms of the state diagram of figure 5, the system either remains in a state "access admitted" or changes to this state if said overload indicator L is below a definable threshold value $L_{thr}$. Correspondingly, the system either remains in a state "access rejected" or changes to this state if the overload indicator L is above said threshold value $L_{thr}$. This will now be demonstrated by the example in figure 6. Said figure shows a shift register 60 of length W comprising registers $S_m(w)$ 61a-61e, w=1...W, in which marked probe packets are indicated by a first value, e.g. $S_m(w)=1$, while unmarked probe packets are indicated by a second value, e.g. $S_m(w)=0$. In this example it is supposed that the marking status of the latest received probe packet is indicated in register $S_m(1)$ 61a and the oldest marking status is indicated in register $S_m(W)$ 61e, i.e. a newly received marking status indicator is inserted via a first signalling line 62 from the left side in the shift register 60 while the oldest value is dropped via a second signalling line 63. It is thus possible to retrieve an indication of the load status during a previous time period by help of an adder 64 that sums up the marking status indicators in the registers $S_m(w)$ 61a-61e. However, before summing up it is recommendable to process each register entry $S_m(w)$ 61a-61e via a multiplication unit 65a-65e that multiplies the register entry with a weighting factor $\xi_m(w)$. By this means it is possible to consider the fact that the register entries have varying importance. Optionally, the weighted sum can be processed by a normalisation unit 66 in order to fit into an appropriate interval, e.g. [0,1]. Apparently, for values 0 and 1 of the marking status indicators as suggested above the sum that represents the load status lies in between an interval from 0, if no marked probe packets have been observed, to

$$\sum_w \xi_m(w)$$ if all probe packets that are represented in the shift register have been marked. The calculated overload indicator L can now be used in order to make a decision on the access state of the transmission path.

Figure 7 shows an example of an appropriate function for determining the weighting factors $\xi_m(w)$ for each position w in the shift register $S_m(w)$ 60. Because the influence of the information from a marking status decreases after a time said factors are comparably higher for the newly received marking status indicators, e.g. w=1,2,3,..., than for older indicators, e.g. w=W. However, it is notwithstanding possible to apply other functions for the determination of the weighting factors if necessary.

The principal idea of the second alternative will now be explained by help of figure 8. In terms of the state diagram of figure 5, a transmission path changes to a state "access rejected" if the number of marked packets 81 within a previously received sequence 82 of probe packets of a first length $W_m$ is higher than a certain maximum number M and remains in said state as long as the overload detector has not received at least a minimum number N of unmarked probe packets 83 within a subsequent sequence 84 of a second length $W_n$. Corre-

spondingly, the transmission path changes to a state "access admitted" if the number of unmarked packets within a previously received sequence of probe packets of a first length $W_n$ is higher than a certain maximum number N and remains in said state until the overload detector has received a sequence of at least M marked probe packets within a subsequent sequence of length $W_m$. This alternative can be regarded as a special case of the first alternative as it is only necessary to count the number of marked or unmarked probe packets.

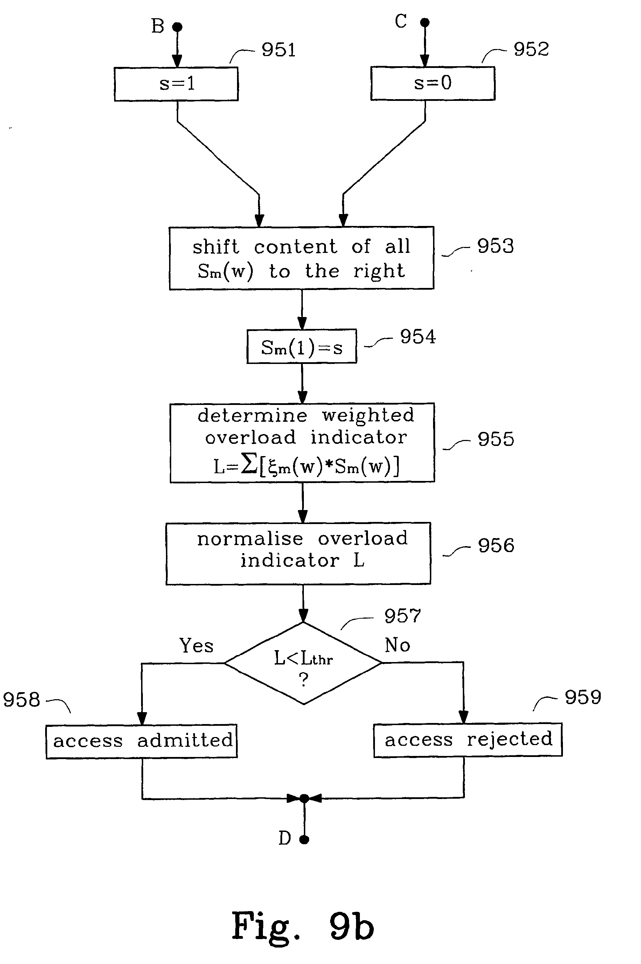

The flowchart in figure 9b refers to the first alternative for determining the access status as described above: Said alternative intends to calculate the load status of a transmission path by means of the marking status of a sequence of received probe packets that are arranged, e.g., in a shift register as indicated in figure 6. A parameter s, which indicates the marking status of the latest received probe packet, is set, e.g., to a value 1, block 951, if the received probe packet is marked, block 915 Yes, or set to a value 0, block 952, if the received probe packet has not been marked, block 915 No. The value of said parameter s is inserted in a shift register $S_m(w)$ 60 by means of shifting the content of the registers 61a-61e one position to the right such that the oldest marking status is dropped, block 953, and inserting the new marking status s at the first position $S_m(1)$, block 954. In a next step, block 955, the overload indicator L is calculated from the marking statuses that are stored in said shift register $S_m(w)$ 60. Said overload indicator L describes the load situation on the transmission path during the time within which the probe packets that are represented by their marking state in the shift register have been received. As the marking status of a received probe packet becomes less interesting after a period of time, the marking status of older probe packets should preferably be weighted lower than the marking status of those probe packets that have been received recently. This is achieved by means of a weighting factor $\xi_m(w)$ that is assigned to each register position $S_m(w)$. An example of a weighting function that can be applied to retrieve said weighting factors $\xi_m(w)$ is shown in figure 7. The weighted overload indicator L can thus be calculated as

$$L = \sum_{w=1}^{W} \left[ \xi_m(w) \cdot S_m(w) \right].$$

Finally, block 956, the overload indicator can be normalised to an appropriate range, e.g. an interval [0,1]. This can be achieved, e.g., by means of a division

by $\sum_{w} \xi_m(w)$ which is the maximum value for the weighted overload indictor.

Then, the calculated overload indicator L is compared to a threshold value $L_{thr}$. In this example, the access status of the transmission path is set to "access admitted", block 958, if the overload indicator L is below said threshold value $L_{thr}$, block 957 Yes, and set to "access rejected", block 959, if the overload indicator L is above said threshold value $L_{thr}$, block 957 No.

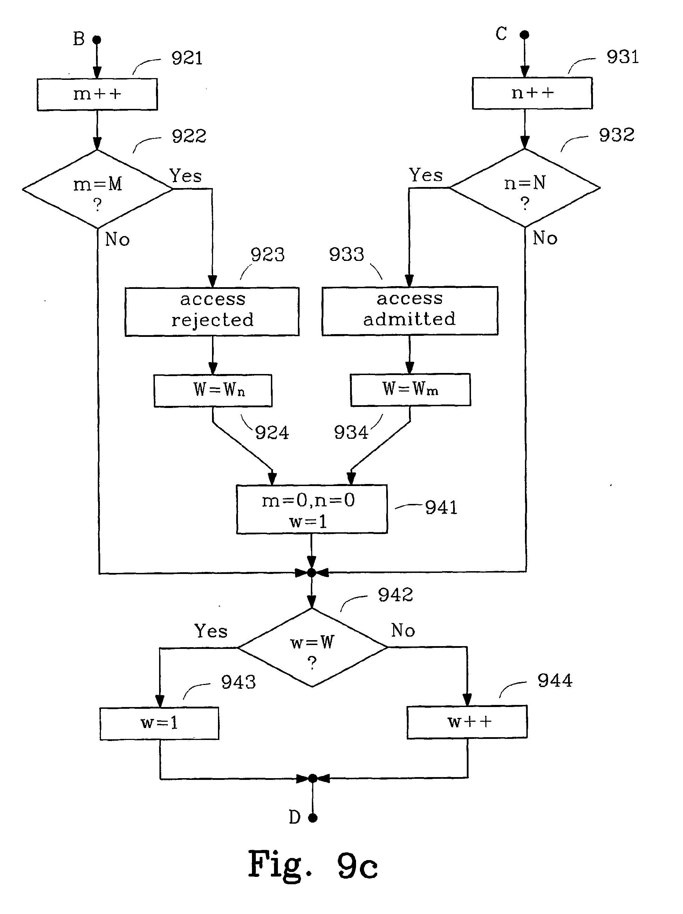

[0047] The flowchart in figure 9c refers to the second alternative for determining the access status as described above: Assuming that a marked probe packet has been received, block 915 Yes. In this case a counter index m is increased, block 921, and it is checked whether this counter index m is still below the allowed maximum number M of marked probe packets within an observation period of $W_m$ received probe packets, block 922. As long as m remains below the maximum value M, block 922 No, no change of the access status is necessary. However, if the number of marked probe packets corresponds to the maximum number M within the observation period $W_m$, block 922 Yes, the access status is changed to the state "access rejected", block 923. This also implies the start of a new observation period of received probe packets that that now counts the number of unmarked packets within an observation period $W_n$. Therefore, the length W of the observation period is changed to $W_n$, block 924. A corresponding succession of method steps is performed if a received probe packet has not been marked, block 915 No, and the counter index n is increased instead, block 931. In this case it is checked whether the counter index n is below a certain minimum number N, block 932. As long as n remains below said minimum value N, block 932 No, no change of the access status is necessary. However, if the number of unmarked probe packets corresponds to the minimum number N within the observation period $W_n$, block 932 Yes, the access status is changed to the state "access admitted", block 933. This also implies the start of a new observation period that now counts the number of marked packets within the observation period $W_m$. Therefore, the length W of the observation period is changed to $W_m$, block 934. If a new observation period is started because of a change of the access state for said transmission link, the counter indexes m, n are reset to zero and the window position pointer w to 1, block 941. Said pointer w keeps track on the observation period, which length can be $W_m$ or $W_n$ depending on the kind of probe packets that must be observed for the actual status in order to perform a state transition. Therefore, the pointer w is reset after each state transition. The pointer w is increased, block 944, as long as its position is within the observation period, block 942 No, and reset to 1, block 943, if it has reached the last position within the observation period, block 942 Yes. Finally, the system returns to the waiting position and waits for the next received probe packet.

The overload detector 14 is now capable to maintain a list of the access status for the uplink and downlink of each transmission path between the radio network controller 12 and the plurality of radio base stations 11a-11c and can thus be applied to make a decision whether the network in general and a certain transmission path in particular is capable to handle the traffic of an additional user equipment that enters said network, either by means of a call setup or due to a handover. Figure 10 shows the steps that the overload detector 14 performs in order to decide whether or not it is possible to grant access to an additional user equipment. If an access request has been received, block 101 Yes, the overload detector makes a decision whether or not access is admitted, block 102, on basis of the determined access state as described above and reports whether the additional traffic is accepted, block 103, or rejected, block 104.

The states "access admitted" and "access rejected" can be assigned generally without concern about the specific type of traffic for which access is sought. However, in order to achieve a more efficient use of the capacity of the transmission paths it is advantageous to make a distinction between several types of traffic. This distinction could be used, e.g., to prioritise access for certain types of traffic if necessary and in order to be able to make a prediction of the assumed additional load for a transmission path. Accordingly, the threshold values that are applied in the alternative methods for determining the access state of each transmission path as described in the flowcharts of figures 9b and 9c should be adapted for each type of traffic in order to achieve an access state decision for various types of traffic. Important traffic characteristics that should be taken into account with regard to Load Control are, inter alia, the predicted bandwidth demand and the delay sensitivity of the type of traffic of the call that requests access for a transmission link. This will now be explained by means of an example for distinction of traffic classes that follows a suggestion by 3GPP: A first traffic class "conversational" refers to bidirectional communication between two humans, i.e. speech, and is characterised by high demands on the permitted delay but a rather modest bandwidth demand. A second traffic class "streaming" refers to communication between a computer and a human, e.g. transmission of video data, and is characterised, e.g., by a high bandwidth demand. A third traffic class "interactive" denotes traffic between two computers, e.g. Internet-related exchange of information, which is characterised by relaxed delay demands on the one hand but temporarily high bandwidth demand on the other hand. Finally, a fourth traffic class "background" denotes traffic without specific delay demands and, normally, modest bandwidth demand, e.g. transfer of short messages or other kinds of supervision messages. The adjustable threshold parameter for the first alternative of the method according to the present invention as described in figure 9b is the threshold value $L_{thr}$ for the overload indicator L. When applying the second alternative of the method according to the present invention as described in figure 9c the adjustable threshold parameters are the maximum number M of received marked probe packets within a first observation period and the minimum number N of received unmarked probe packets within a second observation period. Another adjustable parameter for both alternatives is the length W of the observation period, either for counting the marking status of received probe packets or for determining the weighted overload indicator L. When considering delay sensitive traffic or traffic that needs high bandwidth it might be recommendable to define a low maximum number M of marked probe packets or, correspondingly, a low threshold value for the overload indicator L. For these types of traffic the minimum number N of unmarked packets should be sufficiently high; however, without blocking access to the transmission link longer than necessary. The length W of the observation period must be sufficiently long in order to be able to retrieve reliable information on the load status on the observed transmission link. This is especially important for traffic with varying bandwidth demand, e.g. downloading of information from the Internet, that makes it necessary to observe the marking status during a longer time period. However, one must keep in mind that a too long observation period includes information that might be no longer relevant and can delay a proper updating of the load status of a transmission path.

**Claims**

1. A method for overload detection in an overload detector (14), the overload detector being part of a communication network (10) comprising a plurality of network units (11a-11c) that are connected to at least one centralised controller unit (12) by means of transmission paths and communicating with this unit (12) by means of an IP-based communication protocol whereof nodes (13a-13e) of said transmission paths include Load Control units (20) that assign a marking status indicator to dedicated IP probe packets depending on the load on said transmission path, **characterised by**
performing for each transmission path the steps of transmitting IP probe packets via said transmission path at times $T_k=k*\tau$ where k denotes an integer counter and $\tau$ denotes a time interval (43),
determining a load indication (921,931,955) for the transmission path from the marking status indicators of a sequence of IP probe packets that have been received from said path,
assigning an access state (916,923,933,958,959) to said transmission path depending on whether the load indication complies with an appropriate criterion (922,932,957),
reporting the access state (103,104) of the transmission path to the centralised controller unit in response to an access request (101) to send additional traffic via said transmission path.

2. The method according to claim 1, wherein $\tau$ denotes a time interval of constant length.

**3.** The method according to claim 1, wherein $\tau$ denotes a time interval within which a constant number of bits is transmitted via the transmission path.

**4.** The method according to one of claims 1-3, wherein different IP probe packets are transmitted in order to determine a link load indication for the uplink and downlink.

**5.** The method according to claim 4, wherein IP probe packets for the uplink and downlink are distinguished by means of an unused bit in the IP header field.

**6.** The method according to claim 4, wherein the IP probe packets that are transmitted from the overload detector (14) are applied to determine a load indication for a first direction while the network units (11a-11c) transmit IP probe packets that are applied to determine a load indication for the reverse direction.

**7.** The method according to claim 6, wherein said first direction denotes the downlink and said second direction denotes the uplink.

**8.** The method according to one of claims 1-7, wherein the load indication is retrieved from a weighted sum of the marking status indicators that have been received from a sequence of received IP probe packets (955).

**9.** The method according to claim 8, wherein the access state is assigned to the transmission path (958,959) depending on whether the load indication is below or above a certain threshold value (957).

**10.** The method according to one of claims 1-7, wherein the load indication is retrieved from the number of marked and unmarked IP probe packets that have been received during a fixed observation period (921,931).

**11.** The method according to claim 10, wherein the access state is assigned to the transmission path (923,933) depending on whether the number of IP probe packets that has been received from said path during a first observation period (934) and indicating a first marking status corresponds to a first threshold value (922); and wherein said access state is maintained until a number of IP probe packets that has been received from said path during a second observation period (924) and indicating the opposite marking status corresponds to a second threshold value (932).

**12.** The method according to claim 9 or 11, wherein different threshold values are applied for different traffic classes that are at least distinguishable by the parameters delay sensitivity and bandwidth demand.

**13.** An overload detector (14)
**characterised in**
means for performing all the steps of the method according to anyone of claims 1-12.

**14.** A communication network (10) comprising a plurality of network units (11a-11c) that are connected to at least one centralised controller unit (12) by means of transmission paths and adapted to communicate with said unit (12) by means of an IP-based communication protocol whereof nodes (13a-13e) of said transmission paths include a Load Control unit (20) adapted to assign a marking status indicator to dedicated IP probe packets depending on the load on said transmission path,
**characterised in**
an overload detector (14) according to claim 13 connected to said centralised controller unit (12) and to each of the transmission paths to said network units (11a-11c).

**15.** The communication network according to claim 14, wherein the communication network (10) is a UMTS radio access network.

**16.** A computer program product loadable in a memory in an overload detector (14),
**characterised in**
**that** it contains instructions for performing, by the overload detector, all the method steps according to anyone of claims 1-12.

**Patentansprüche**

**1.** Verfahren zur Überlastermittlung in einem Überlastdetektor (14), wobei der Überlastdetektor Teil eines Kommunikationsnetzwerks (10) ist, das eine Vielzahl von Netzwerk-Einheiten (11a-11c) umfaßt, die mittels Übertragungswegen mit mindestens einer zentralisierten Controller-Einheit (12) verbunden sind und mit dieser Einheit (12) mittels eines IP-gestützten Kommunikationsprotokolls kommunizieren, wobei Knoten (13a-13e) der Übertragungswege Laststeuerungseinheiten (20) aufweisen, die zweckgebundenen IP-Prüfpaketen abhängig von der Last auf dem Übertragungsweg einen Markierungsstatusindikator zuweisen,
**gekennzeichnet durch**
Durchführen der folgenden Schritte für jeden Übertragungsweg:

　　Übertragen von IP-Prüfpaketen über den Übertragungsweg zu Zeiten $T_k = k \cdot \tau$, wobei k einen ganzzahligen Zähler bezeichnet und $\tau$ ein Zeitintervall bezeichnet (43),
　　Bestimmen einer Lastangabe (921, 931, 955) für den Übertragungsweg aus den Markierungsstatusindikatoren einer Folge von IP-Prüfpaketen, die von dem Weg kommend empfangen worden sind,

Zuweisen eines Zugangsstatus (916, 923, 933, 958, 959) an den Übertragungsweg, abhängig davon, ob die Lastangabe ein angemessenes Kriterium erfüllt (922, 932, 957),

Melden des Zugangsstatus (103, 104) des Übertragungswegs an die zentralisierte Controller-Einheit als Antwort auf eine Zugangsanforderung (101), um zusätzlichen Verkehr über den Übertragungsweg zu senden.

2. Verfahren nach Anspruch 1, wobei τ ein Zeitintervall konstanter Länge bezeichnet.

3. Verfahren nach Anspruch 1, wobei τ ein Zeitintervall bezeichnet, innerhalb dessen eine konstante Anzahl von Bits über den Übertragungsweg übertragen wird.

4. Verfahren nach einem der Ansprüche 1 bis 3, wobei unterschiedliche IP-Prüfpakete übertragen werden, um eine Übertragungsstreckenlastangabe für die Aufwärtsstrecke und die Abwärtsstrecke zu bestimmen.

5. Verfahren nach Anspruch 4, wobei IP-Prüfpakete für die Aufwärtsstrecke und die Abwärtsstrecke mittels eines nichtgenutzten Bits im IP-Headerfeld unterschieden werden.

6. Verfahren nach Anspruch 4, wobei die IP-Prüfpakete, die vom Überlastdetektor (14) übertragen werden, angewendet werden, um eine Lastangabe für eine erste Richtung zu bestimmen, während die Netzwerk-Einheiten (11a-11c) IP-Prüfpakete übertragen, die angewendet werden, um eine Lastangabe für die Gegenrichtung zu bestimmen.

7. Verfahren nach Anspruch 6, wobei die erste Richtung die Abwärtsstrecke bezeichnet und die zweite Richtung die Aufwärtsstrecke bezeichnet.

8. Verfahren nach einem der Ansprüche 1 bis 7, wobei die Lastangabe einer gewichteten Summe der Markierungsstatusindikatoren, die aus einer Folge von empfangenen IP-Prüfpaketen empfangen worden sind, entnommen wird (955).

9. Verfahren nach Anspruch 8, wobei der Zugangsstatus abhängig davon, ob die Lastangabe unter oder über einem bestimmten Schwellwert liegt (957), dem Übertragungsweg zugewiesen wird (958, 959).

10. Verfahren nach einem der Ansprüche 1 bis 7, wobei die Lastangabe der Anzahl von markierten und nichtmarkierten IP-Prüfpaketen, die während einer festen Beobachtungsperiode empfangen worden sind, entnommen wird (921, 931).

11. Verfahren nach Anspruch 10, wobei der Zugangsstatus dem Übertragungsweg zugewiesen wird (923, 933) abhängig davon, ob die Anzahl von IP-Prüfpaketen, die von dem Pfad während einer ersten Beobachtungsperiode empfangen worden ist (934) und einen ersten Markierungsstatus angibt, einem ersten Schwellwert entspricht (922); und wobei der Zugangsstatus beibehalten wird, bis eine Anzahl von IP-Prüfpaketen, die von dem Pfad während einer zweiten Beobachtungsperiode empfangen worden ist (924) und den entgegengesetzten Markierungsstatus angibt, einem zweiten Schwellwert entspricht (932).

12. Verfahren nach Anspruch 9 oder 11, wobei für unterschiedliche Verkehrsklassen, die zumindest durch die Parameter Verzögerungsempfindlichkeit und Bandbreitenbedarf unterscheidbar sind, unterschiedliche Schwellwerte angewendet werden.

13. Überlastdetektor (14), **gekennzeichnet durch** Mittel zur Durchführung aller Schritte des Verfahrens nach einem der Ansprüche 1 bis 12.

14. Kommunikationsnetzwerk (10), umfassend eine Vielzahl von Netzwerk-Einheiten (11a-11c), die mittels Übertragungswegen mit mindestens einer zentralisierten Controller-Einheit (12) verbunden sind und dafür eingerichtet sind, mit dieser Einheit (12) mittels eines IP-gestützten Kommunikationsprotokolls zu kommunizieren, wobei Knoten (13a-13e) der Übertragungswege eine Laststeuerungseinheit (20) aufweisen, die dafür eingerichtet ist, zweckgebundenen IP-Prüfpaketen abhängig von der Last auf dem Übertragungsweg einen Markierungsstatusindikator zuweisen,

**gekennzeichnet durch**

einen Überlastdetektor (14) nach Anspruch 13, der mit der zentralisierten Controller-Einheit (12) und mit jedem der Übertragungswege zu den Netzwerk-Einheiten (11a-11c) verbunden ist.

15. Kommunikationsnetzwerk nach Anspruch 14, wobei das Kommunikationsnetzwerk (10) ein UMTS-Funkzugangsnetz ist.

16. Computerprogrammerzeugnis, ladbar in einen Speicher in einem Überlastdetektor (14),
**dadurch gekennzeichnet,**
**daß** es Anweisungen zum Durchführen aller Verfahrensschritte nach einem der Ansprüche 1 bis 12 durch den Überlastdetektor enthält.

**Revendications**

1. Procédé pour une détection de surcharge dans un détecteur de surcharge (14), le détecteur de surcharge faisant partie d'un réseau de communication (10) comprenant une pluralité d'unités de réseau (11a-11c) qui sont connectées à au moins une unité de contrôleur centralisée (12) au moyen de voies de transmission et qui communiquent avec cette unité (12) au moyen d'un protocole de communication basé sur IP, où des noeuds (13a-13e) desdites voies de transmission incluent des unités de commande de charge (20) qui assignent un indicateur d'état de marquage à des paquets de sonde IP dédiés en fonction de la charge sur ladite voie de transmission, **caractérisé par**:

la réalisation pour chaque voie de transmission des étapes de:

transmission de paquets de sonde IP via ladite voie de transmission à des temps $T_k$ = k * τ où k représente un compteur entier et τ représente un intervalle temporel (43); détermination d'une indication de charge (921, 931, 955) pour la voie de transmission à partir des indicateurs d'état de marquage d'une séquence de paquets de sonde IP qui ont été reçus depuis ladite voie; assignation d'un état d'accès (916, 923, 933, 958, 959) à ladite voie de transmission en fonction de si l'indication de charge est conforme ou non à un critère approprié (922, 932, 957); rapport de l'état d'accès (103, 104) de la voie de transmission à l'unité de contrôleur centralisée en réponse à une requête d'accès (101) afin d'envoyer un trafic additionnel via ladite voie de transmission.

2. Procédé selon la revendication 1, dans lequel τ représente un intervalle temporel de longueur constante.

3. Procédé selon la revendication 1, dans lequel τ représente un intervalle temporel à l'intérieur duquel un nombre constant de bits sont transmis via la voie de transmission.

4. Procédé selon l'une des revendications 1 à 3, dans lequel différents paquets de sonde IP sont transmis afin de déterminer une indication de charge de liaison pour la liaison montante et la liaison descendante.

5. Procédé selon la revendication 4, dans lequel des paquets de sonde IP pour la liaison montante et la liaison descendante sont distingués au moyen d'un bit inutilisé dans la zone d'en-tête IP.

6. Procédé selon la revendication 4, dans lequel les paquets de sonde IP qui sont transmis depuis le détecteur de surcharge (14) sont appliqués pour déterminer une indication de charge pour un premier sens tandis que les unités de réseau (11a-11c) transmettent des paquets de sonde IP qui sont appliqués pour déterminer une indication de charge pour le sens inverse.

7. Procédé selon la revendication 6, dans lequel ledit premier sens représente la liaison descendante et ledit second sens représente la liaison montante.

8. Procédé selon l'une des revendications 1 à 7, dans lequel l'indication de charge est retrouvée à partir d'une somme pondérée des indicateurs d'état de marquage qui ont été reçus depuis une séquence de paquets de sonde IP reçus (955).

9. Procédé selon la revendication 8, dans lequel l'état d'accès est assigné à la voie de transmission (958, 959) en fonction de si l'indication de charge est au-dessous ou au-dessus d'une certaine valeur de seuil (957).

10. Procédé selon l'une des revendications 1 à 7, dans lequel l'indication de charge est retrouvée à partir du nombre de paquets de sonde IP marqués et non marqués qui ont été reçus pendant une période d'observation fixe (921, 931).

11. Procédé selon la revendication 10, dans lequel l'état d'accès est assigné à la voie de transmission (923, 933) en fonction de si le nombre de paquets de sonde IP qui ont été reçus depuis ladite voie pendant une première période d'observation (934) et qui indiquent un premier état de marquage correspond à une première valeur de seuil (922); et dans lequel ledit état d'accès est maintenu jusqu'à ce qu'un nombre de paquets de sonde IP qui ont été reçus depuis ladite voie pendant une seconde période d'observation (924) et qui indiquent l'état de marquage opposé correspond à une seconde valeur de seuil (932).

12. Procédé selon la revendication 9 ou 11, dans lequel des valeurs de seuil différentes sont appliquées pour des classes de trafic différentes qui peuvent au moins être distinguées au moyen des paramètres que sont la sensibilité en termes de retard et la demande en bande passante.

13. Détecteur de surcharge (14) **caractérisé par** un moyen pour réaliser toutes les étapes du procédé selon l'une quelconque des revendications 1 à 12.

14. Réseau de communication (10) comprenant une pluralité d'unités de réseau (11a-11c) qui sont connectées à au moins une unité de contrôleur centralisée (12) au moyen de voies de transmission et qui sont adaptées pour communiquer avec ladite unité (12) au moyen d'un protocole de communication basé sur IP, où des noeuds (13a-13e) desdites voies de transmission incluent une unité de commande de charge (20) adaptée pour assigner un indicateur d'état de marquage à des paquets de sonde IP dédiés en fonction de la charge sur ladite voie de transmission,
**caractérisé en ce que** :

un détecteur de surcharge (14) selon la revendication 13 est connecté à ladite unité de contrôleur centralisée (12) et à chacune des voies de transmission sur lesdites unités de réseau (11a-11c).

15. Réseau de communication selon la revendication 14, dans lequel le réseau de communication (10) est un réseau d'accès radio UMTS.

16. Produit de programme d'ordinateur chargeable dans une mémoire dans un détecteur de surcharge (14), **caractérisé en ce qu'**il contient des instructions pour réaliser, au moyen du détecteur de surcharge, toutes les étapes de procédé selon l'une quelconque des revendications 1 à 12.

10

Fig. 1

20

Fig. 2

Fig. 3

41 ⌇

```
┌─────────────┐
│    t = 0    │
│    k = 0    │
└─────────────┘
```

42

No    t = Tk ?

Yes

43 ⌇
```
┌──────────────────────────┐
│  initiate transmission   │
│   of  a  probe  packet   │
└──────────────────────────┘
```

44 ⌇
```
┌─────────────┐
│    k++      │
└─────────────┘
```

# Fig. 4

Fig. 5

60

Fig. 6

Fig. 7

82 — 84 —
←——— Wm ———→ ←——— Wn ———→

| ✓ | | ✓ | ✓ | ✓ | | ✓ | | | | ✓ | | | | |

81 83 ——→ t

# Fig. 8

A ●

911 — access admitted

912 — m=0, n=0

913 — w=1
W=Wm

No ← probe packet received ?

914

Yes ↓

915 — probe packet marked ?

Yes → B ●          No → ● C

916 — determine access status

● D

# Fig. 9a

B

951

s=1

C

952

s=0

shift content of all
Sm(w) to the right

953

Sm(1)=s

954

determine weighted
overload indicator
$L=\sum[\xi_m(w)*S_m(w)]$

955

normalise overload
indicator L

956

957

Yes

$L<L_{thr}$
?

No

958

access admitted

access rejected

959

D

Fig. 9b

Fig. 9c

Fig. 10

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• EP 0858242 A2

**Non-patent literature cited in the description**

• **L. WESTBERG.** *Load Control of Real-Time Traffic,* 19 April 2000